Europäisches Patentamt

European Patent Office

Office européen des brevets

(19)

(11) **EP 0 635 127 B1**

(12) **FASCICULE DE BREVET EUROPEEN**

(45) Date de publication et mention
de la délivrance du brevet:
**16.09.1998 Bulletin 1998/38**

(51) Int Cl.⁶: **G01N 21/31**

(21) Numéro de dépôt: **94905765.7**

(86) Numéro de dépôt international:
**PCT/FR94/00120**

(22) Date de dépôt: **31.01.1994**

(87) Numéro de publication internationale:
**WO 94/18543 (18.08.1994 Gazette 1994/19)**

(54) **DISPOSITIF PERFECTIONNE ET METHODE POUR MESURER OPTIQUEMENT DES CARACTERISTIQUES D'UNE SUBSTANCE**

VERBESSERTES GERÄT UND VERFAHREN ZUR OPTISCHEN MESSUNG DER EIGENSCHAFTEN EINER SUBSTANZ

ADVANCED DEVICE AND METHOD FOR OPTICALLY MEASURING THE PROPERTIES OF A SUBSTANCE

(84) Etats contractants désignés:
**BE DE GB IT NL SE**

(30) Priorité: **09.02.1993 FR 9301513**

(43) Date de publication de la demande:
**25.01.1995 Bulletin 1995/04**

(73) Titulaire: **INSTITUT FRANCAIS DU PETROLE**
**92502 Rueil-Malmaison (FR)**

(72) Inventeurs:
• **DELIGNIERES, Robert**
  **F-78750 Mareil-Marly (FR)**
• **DURAND, Christian**
  **F-78160 Marly-le-Roi (FR)**

(56) Documents cités:
**US-A- 3 802 776**          **US-A- 3 825 342**

**Description**

La présente invention concerne un dispositif pour mesurer optiquement des caractéristiques d'une substance, telles que son absorbance par exemple, et une méthode pour sa mise en oeuvre.

Dans la demande de brevet français FR-A-2 689 636, est décrit un dispositif pour mesurer l'absorbance optique vraie d'une substance contenue dans une cellule. Par des moyens de commutation optique, on envoie de la lumière issue d'une source de lumière telle qu'une lampe halogène dont le spectre de fréquence est connu, successivement sur trois filtres optiques de longueurs d'onde respectives bien définies. La première correspond au point isobestique de la substance colorant où l'absorbance de la fraction basique de la substance est égale à celle de sa fraction acide et donc indépendante de la valeur du pH. La deuxième est dans une partie du spectre où la substance réagit le plus aux variations du paramètre à mesurer. La troisième est dans une partie du spectre où l'absorbance de la substance ne subit sensiblement aucune variation. On dirige la lumière issue de chacun des filtres de façon qu'elle traverse alternativement la cellule contenant la substance à analyser et une branche optique de dérivation incluant par exemple un filtre neutre, une fibre optique de dérivation (by-pass), ou encore une cellule de référence etc. L'intensité des rayons émergents successifs est mesurée et les différentes mesures sont traitées par un ensemble de gestion et de calcul, qui détermine des caractéristiques optiques de la substance telle que l'absorbance vraie, qui sont indépendantes des fluctuations possibles de la source lumineuse.

La méthode employée fournit des résultats précis et fiables mais le dispositif qui est utilisé pour sa mise en oeuvre est relativement onéreux du fait qu'il comporte plusieurs commutateurs optiques dont le coût unitaire est relativement élevé.

Le dispositif selon l'invention a pour objet aussi de mesurer des caractéristiques optiques d'une substance réagissante contenue dans une cellule transparente, telles que son absorbance vraie mais sa réalisation est plus simple et moins onéreuse. Il comporte au moins une source lumineuse, une première branche optique et une deuxième branche optique permettant sélectivement le passage de la lumière au travers de la cellule et à l'extérieur de celle-ci, un système optique pour former des rayons ayant traversé la première branche ou la deuxième branche optique et un filtre optique sélectif parmi un ensemble de trois filtres sélectifs centrés le premier sur une première longueur d'onde correspondant au point isobestique de la substance réagissante, le deuxième, sur une longueur d'onde dans une partie du spectre de la lumière où la substance est la plus sensible et le troisième, dans une autre partie du spectre où la substance est la moins sensible, des moyens de mesure de l'intensité de la lumière ayant traversé le système optique, un ensemble de pilotage, et des moyens de sélection contrôlés par ledit ensemble de pilotage et un bloc d'alimentation électrique.

Le dispositif est caractérisé en ce que les moyens de sélection sont constitués de deux obturateurs optiques disposés respectivement dans la première branche et la deuxième branche, et des moyens de commutation électrique.

L'ensemble de pilotage comporte par exemple un processeur de commande, une unité d'acquisition des signaux de mesure d'intensité lumineuse et un ensemble d'interface pour contrôler lesdits moyens de sélection.

Suivant un premier mode de réalisation, il comporte une source de lumière unique éclairant les deux branches et le système optique comporte des moyens de dérivation pour diriger vers les trois filtres les rayons lumineux ayant traversé la première ou la deuxième branche, les moyens de mesure comportent trois détecteurs pour mesurer la lumière ayant traversé les trois filtres, et les moyens de commutation électrique comportent des éléments pour connecter par intermittence lesdits détecteurs avec ledit ensemble de pilotage et un commutateur pour connecter la lampe au bloc d'alimentation électrique par intermittence.

Suivant un autre mode de réalisation, le dispositif comporte trois sources lumineuses, le système optique comporte des moyens de dérivation pour diriger la lumière desdites sources respectivement au travers desdits trois filtres sélectifs et des moyens diviseurs pour appliquer la lumière filtrée à la première et la deuxième branche, les moyens de mesure comportent un détecteur unique pour mesurer la lumière émanant de l'une ou l'autre branche, et les moyens de commutation électrique comportent des éléments pour l'alimentation sélective de l'une des trois sources lumineuses.

La deuxième branche optique comporte par exemple une fibre optique associée éventuellement à un filtre neutre ou une cellule identique à la première et contenant une substance neutre.

La méthode selon l'invention est caractérisée suivant un mode de réalisation, en ce qu'elle comporte la réalisation automatique de cycles de mesure sous le contrôle de l'ensemble de pilotage, chacun d'eux comportant :

- une étape de mesure où l'on dirige la lumière ayant traversé la cellule successivement au travers des trois filtres et on acquiert les valeurs détectées des intensités lumineuses issues des trois filtres.

- une étape de mesure où l'on dirige la lumière ayant traversé la deuxième branche successivement au travers des trois filtres et on acquiert également les valeurs détectées des instensités lumineuses issues des trois filtres; et

- on détermine des caractéristiques de la substance réagissante par une combinaison des valeurs d'intensité mesurées par chaque détecteur, respectivement aux cours des deux étapes précédentes.

Dans un autre mode de réalisation du dispositif, chaque cycle de mesure peut aussi comporter :

- une étape de mesure où l'on dirige la lumière ayant traversé successivement les trois filtres vers la cellule contenant la substance réagissante et on acquiert les valeurs détectées par le détecteur;
- une étape de mesure où l'on dirige la lumière ayant traversé successivement les trois filtres vers le milieu de référence et on acquiert aussi les valeurs détectées par le détecteur; et
- on détermine des caractéristiques de la substance réagissante par une combinaison des valeurs d'intensité mesurées par le détecteur et émanant de la même lampe.

Quel que soit le mode de réalisation employé, le dispositif ne comporte que deux obturateurs optiques, la séquence des opérations de mesure comparée nécessaire à l'acquisition des mesures étant contrôlée par des commutations électriques faciles à réaliser. Le coût et la fiabilité du dispositif sont donc diminués de façon importante.

Pour améliorer encore la précision des mesures, le dispositif peut aussi comporter des moyens de mesure de la température ambiante et de la tension d'alimentation de chaque lampe.

D'autres caractéristiques et avantages du dispositif selon l'invention et de la méthode de mise en oeuvre, apparaîtront mieux à la lecture de la description ci-après de deux modes de réalisation décrits seulement à titre d'exemples en se référant aux dessins annexés où :

- la Fig.1 montre schématiquement un premier mode de réalisation du dispositif avec une source unique et filtrage sélectif opéré sur la lumière émergente;
- la Fig.2 montre schématiquement un deuxième mode de réalisation avec éclairage sélectif de la cellule par trois faisceaux distincts;
- la Fig.3 montre un exemple d'organigramme de mise en oeuvre du mode de réalisation de la Fig.1;
- la Fig.4 détaille l'étape d'acquisition des mesures dans l'organigramme de la Fig.3;
- la Fig.5 montre un exemple d'organigramme de mise en oeuvre du mode de réalisation de la Fig.2; et
- la Fig.6 détaille pour chaque lampe les opérations effectuées.

On rappelle tout d'abord que le pH d'une solution se calcule par la relation:

$$pH = pKi + \log x/(1-x) \qquad (1),$$

où pKi est une constante et x est la fraction basique de la substance. Ce paramètre x est reliée à l'absorbance A de la substance par la relation

$$x = A/(c.l.\varepsilon) \qquad (2)$$

où

c représente la concentration, 1, la longueur du trajet optique traversé par les rayons et $\varepsilon$, le coefficient d'extinction de la cellule. L'absorbance s'exprime en fonction de l'intensité incidente li appliquée à la cellule et de l'intensité le qui en émerge, par la relation :

$$A = \log \frac{li}{le} \qquad (3)$$

Les valeurs de l'absorbance A sont soumises à des fluctuations importantes si l'on procède uniquement à la mesure de le du fait de l'instabilité de la lampe. On sait en effet que les caractéristiques d'une telle source varient au cours du temps. La température de couleur par exemple est susceptible de varier en raison de causes diverses tenant à la lampe elle-même : vaporisation progressive du filament, vieillissement de l'enveloppe etc, et à l'instabilité de l'alimentation électrique. Il en résulte une modification notable de la forme du spectre de fréquence de la source. On observe par exemple que la température de couleur de la source peut diminuer au cours du temps de plus de 10%, ce qui se traduit par des variations importantes des rapports entre les intensités lumineuses appliquées aux différents filtres avec pour conséquence des fausses mesures.

De par sa structure et son mode de mise en oeuvre, le dispositif selon l'invention permet justement de faire abstraction des variations de caractéristiques de la source au cours du temps.

Suivant le premier mode de réalisation, le dispositif comporte une source lumineuse 1 telle qu'une lampe halogène à filament de tungstène. La lumière issue de la source 1 est subdivisée par un séparateur optique 2 en deux pinceaux lumineux qui sont dirigés au moyen de fibres optiques 11, 12 par exemple, le premier, vers une branche optique principale comportant une cellule 3 contenant une substance réactive dont on veut mesurer les variations de couleur, suivie d'un premier obturateur optique O1(4), le deuxième, vers une branche optique dérivée pour former un faisceau passant à l'extérieur de la cellule 3. Cette branche dérivée comporte par exemple un filtre neutre 5 dont la transmittance est choisie sensiblement égale à la transmittance moyenne de la cellule 3, suivi d'un deuxième obturateur optique 02 (6). Les sorties des deux commutateurs 4, 6 sont connectées à un noeud optique 7.

Le faisceau de lumière issu du noeud optique 7, provenant sélectivement de l'une ou l'autre branche, est subdivisée également par un séparateur optique 8 en trois faisceaux qui sont dirigés par trois fibres optiques 13, 14, 15 respectivement vers trois filtres colorés F1, F2, F3. Ces trois filtres laissent passer respectivement les longueurs d'onde 494 nm(L1), 600 nm(L2) et 730nm (L3) par exemple. La première, L1, correspond au point dit isobestique de la substance colorante où l'absorbance de la fraction basique de la substance est égale à celle de sa fraction acide et donc indépendante de la valeur du pH. La deuxième, L2, est celle pour laquelle la substance colorée réagit le plus aux variations du paramètre à mesurer. La troisième, L3, correspond à une longueur d'onde pour laquelle l'absorbance de la substance colorée ne subit aucune variation. Chacun des trois filtres F1, F2, F3 est doublé par exemple d'un filtre neutre dont la transmittance est choisie de façon à équilibrer les intensités lumineuses passant dans les trois branches 13, 14, 15. La lumière ayant traversé respectivement les trois filtres colorés FI, F2, F3 , est appliquée à trois détecteurs photo-électriques D1, D2, D3. Les signaux qu'ils délivrent sont appliqués à trois entrées d'un multiplexeur M.

La gestion du dispositif est assurée par un ensemble de pilotage 9 comportant un processeur de commande 10, une unité d'acquisition 11 connecté à la sortie du multiplexeur M et un ensemble d'interface 12 pour la commande des obturateurs optiques 4, 6 et du multiplexeur M. Le dispositif comporte encore un bloc d'alimentation électrique 13 tel qu'un accumulateur électrique dans le cas d'un fonctionnement autonome du dispositif, ce bloc étant connecté à la lampe 1 par l'intermédiaire d'un interrupteur I1 également commandé par l'ensemble d'interface 12. De préférence, le dispositif comporte aussi une sonde thermique 14 disposée au voisinage des éléments du dispositif pour mesurer la température ambiante, cette sonde étant reliée à une entrée du multiplexeur M, ainsi qu'un voltmètre pour mesurer la tension délivrée par le bloc d'alimentation 13.

On peut sans inconvénient intervertir dans chacune des branches I1, I2, l'obturateur O1 ou O2 et l'élément associé 3 ou 5.

La méthode de mesure que l'on applique permet de faire abstraction des fluctuations possibles d'intensité lumineuse de la source en déterminant chaque valeur d'absorbance à partir de mesures faites par un même détecteur.

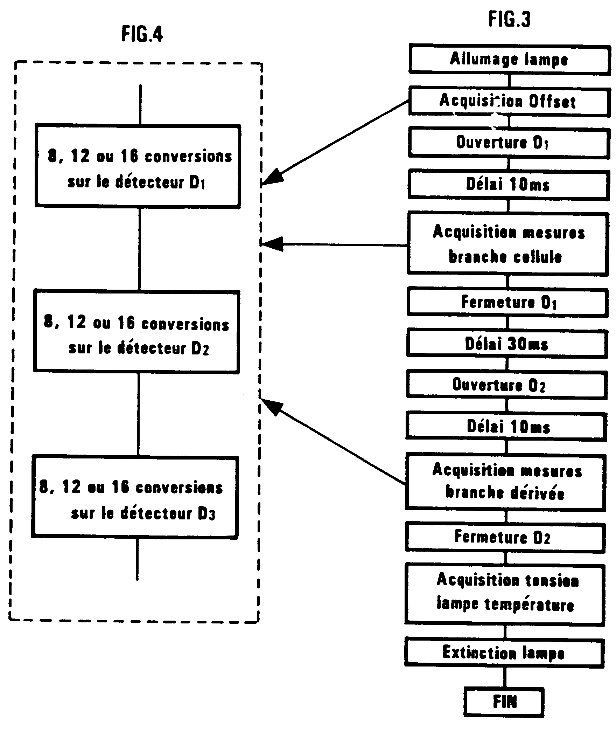

Comme l'indique les organigrammes des Fig.3, 4, chaque cycle de mesure comporte tout d'abord un allumage de la lampe 1 par fermeture de l'interrupteur I4 suivi d'une série de 8, 12 ou 16 mesures dites d'"offset" où, les obturateurs O1, 02 étant fermés, on mesure en séquence les signaux de bruit affectant les détecteurs D1, D2, D3 par une commande séquentielle du muliplexeur M, ces signaux étant acquis et numérisés par l'ensemble d'acquisition 11. Les signaux de bruit ayant été mesurés, on procède ensuite en ouvrant l'obturateur O1, à une séquence de mesures de la lumière ayant traversé la cellule 3 sur la branche principale I1 et successivement filtrée à travers les filtres F1, F2, F3. Par ouverture de l'obturateur O2 et suivant une séquence analogue, on procède ensuite à l'acquisition de mesures de la lumière incidente issue de la source qui a traversé le filtre neutre 5 de la branche dérivée I2 puis successivement les filtres F1 à F3. Pour compléter les mesures précédentes, on procède de préférence à une acquisition de la température mesurée par le voltmètre 14 ainsi que de la tension électrique appliquée à la lampe 1 mesurée par l'élément 15.

A partir des intensités de la lumière passant par la branche principale contenant la cellule 3 et par la branche dérivée contenant le filtre neutre 5, on calcule les absorbances A1, A2 et A3 correspondant aux trois longueurs d'onde des filtres colorés F1 à F3. Par application de la relation (2), on peut montrer que l'on obtient la valeur de la fraction basique x de la substance étudiée, par la relation suivante :

$$x = k. (A2 - A3)/ (A1 - A3)$$

où k est une constante, et que, du fait de la méthode comparative employée, on fait totalement abstraction de toute dégradation des caractéristiques de la lampe 1 au cours du temps. Le processeur 12 peut en déduire par exemple le pH de la substance analysée.

De préférence, on tient compte de la température et de la tension effective appliquée à la lampe 1 de façon à minimiser les erreurs. On constate en effet que les erreurs de mesure quand la température passe de 20°C à 60°C sont de l'ordre de 4%. Pour compenser ces variations, le processeur 12 est adapté à appliquer aux mesures une correction en fonction de la variation de température, telle qu'uune correction linéaire par exemple.

Si l'on veut encore mieux minimiser les erreurs de mesure, on peut aussi tenir compte des variations de la tension électrique (dues dans le cas d'une alimentation autonome, à la décharge de l'accumulateur), qui ont pour effet de faire varier l'intensité lumineuse de la lampe 1. En tenant compte de ces variations de la température et de la tension électrique, on peut obtenir des mesures précises à 1‰ près.

Le mode de réalisation précédent convient si la cellule contient un colorant qui n'est pas affecté, de façon sensible, d'être éclairé directement par la lampe 1 et de recevoir ainsi la totalité du spectre lumineux.

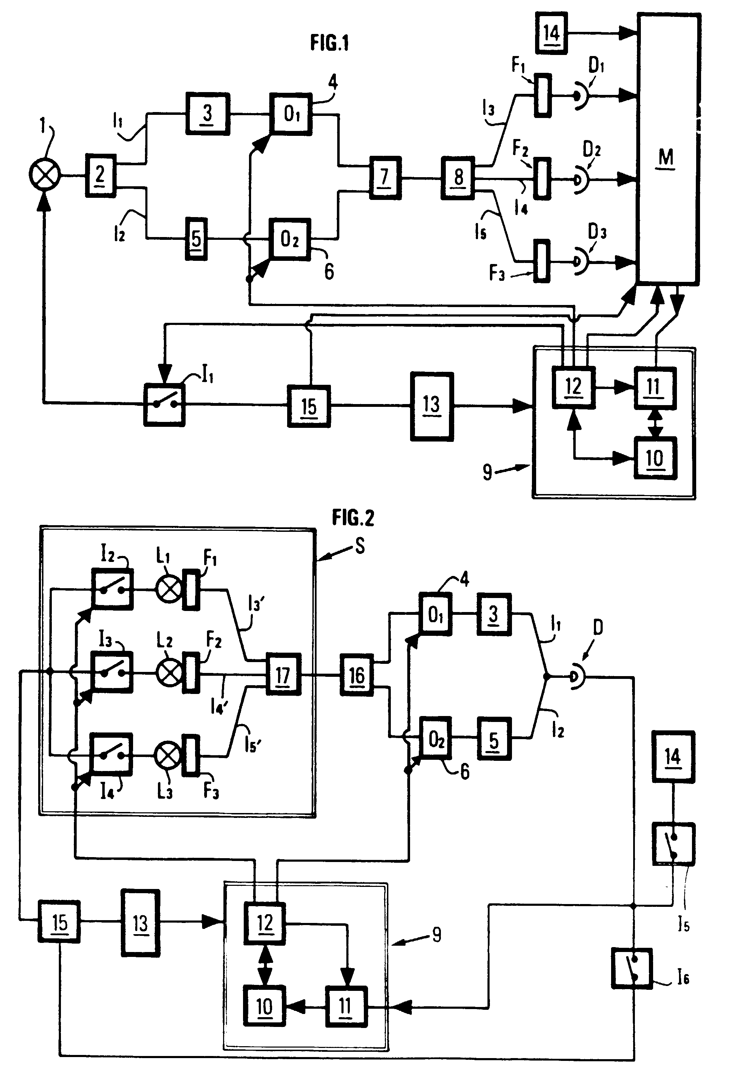

Dans le cas contraire, il est préférable d'utiliser le mode de réalisation de la Fig.2. Ici, la branche principale I1 constituée par la cellule 3 et l'obturateur optique 4, et la branche dérivée comportant par exemple un filtre neutre, sont connectées à un séparateur optique 16 relié à un moyen de sélection optique S à trois branches I'3, I'4, I'5. Chacune d'elles comporte une lampe respectivement L1, L2, L3, analogues à la lampe 1 (Fig.1) qui sont reliées au bloc d'alimentation électrique 13 respectivement par trois interrupteurs I2, I3, I4 commandés par le circuit d'interface 12. La lumière de ces trois lampes est filtrée respectivement par les trois filtres colorés F1, F2, F3 précédents. La lumière filtrée par ces trois filtres, est dirigée via un noeud optique 17, vers l'entrée du séparateur optique 16. La lumière issue des deux branches I1, I2 est appliquée à un détecteur photo-électrique unique D. Une sonde de température 14 est également reliée à l'entrée de l'unité d'acquisition 11 par l'intermédiaire d'un interrupteur I5 commandé par l'ensemble d'interface 12. De même, un voltmètre 15 mesurant la tension électrique appliquée aux lampes L1 à L3 est interposé entre elles et le bloc d'alimentation 13, le signal du voltmètre étant appliqué à l'unité d'acquisition 11 par l'intermédiaire d'un interrupteur I6.

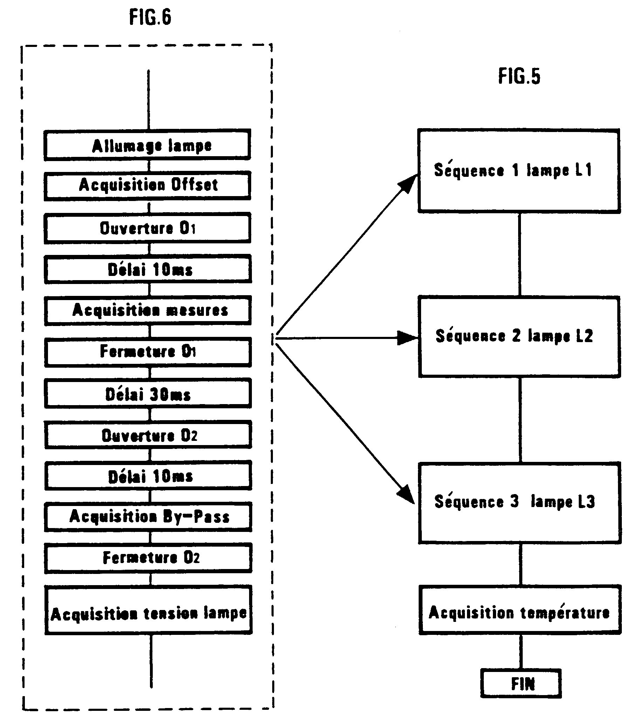

Avec ce mode de réalisation, chaque cycle de mesure comporte (Fig.5,6) trois séquences identiques mettant en oeuvre successivement les lampes L1, L2 et L3. Chacune des séquences successives comporte l'allumage de la lampe correspondante, L1 pour la première par exemple, et, les obturateurs O1 et O2 étant fermés, on acquiert le signal délivré par le détecteur photo-électrique unique D en l'absence de lumière (tension d'offset). Ensuite dans un premier intervalle de temps d'ouverture de l'obturateur O1, on réalise plusieurs mesures successives du signal du détecteur D. L'opération précédente est reproduite pour les lampes L2 et L3 successivement. Chaque séquence se termine par une acquisition de la tension électrique mesurée par le voltmètre 15. Après les trois séquences précédentes, on achève chaque cycle par une acquisition de la température ambiante mesurée par le capteur 14. Comme précédemment, on combine les mesures d'intensité lumineuses pour obtenir les valeurs d'absorbance A1 à A3 et en déduire par exemple le pH de la solution contenue dans la cellule 3.

Les différentes branches ou chemins optiques permettant de diriger la lumière au travers la cellule 3, le filtre neutre 5 et les filtres colorés peuvent être constitués par des fibres optiques mais ils peuvent être obtenus aussi bien par des moyens de convergence ou de divergence optiques conventionnelles (optique "aérienne").

On ne sortirait pas du cadre de l'invention en remplaçant le filtre neutre utilisé pour constituer le milieu de référence, par une cellule analogue à la cellule 3 mais contenant une substance neutre choisie de façon que l'absorbance de cette cellule parallèle soit égale à l'absorbance moyenne de la cellule principale.

## Revendications

1. Dispositif pour mesurer optiquement les modifications d'une substance réagissante contenue dans une cellule transparente (3), comportant au moins une source lumineuse (1), une première branche optique et une deuxième branche optique permettant sélectivement le passage de la lumière incidente au travers de la cellule (3) et à l'extérieur de celle-ci dérivés, un système optique pour former des rayons ayant traversé la première branche ou la deuxième branche optique et un filtre optique sélectif (F1, F2, F3) parmi un ensemble de trois filtres sélectifs centrés, le premier sur une première longueur d'onde correspondant au point isobestique de la substance réagissante, le deuxième sur une longueur d'onde dans une partie du spectre de la lumière où la substance est la plus sensible et le troisième, dans une autre partie du spectre où la substance est la moins sensible, des moyens de mesure (D, D1-D3) de l'intensité de la lumière ayant traversé le système optique, un ensemble de pilotage (9), des moyens de sélection contrôlés par ledit ensemble de pilotage et un bloc d'alimentation électrique (13), caractérisé en ce que les moyens de sélection sont constitués de deux obturateurs optiques (01, 02) disposés respectivement dans la première branche et la deuxième branche, et des moyens de commutation électrique (M, $I_2$-$I_4$).

2. Dispositif selon la revendication 1, caractérisé en ce que l'ensemble de pilotage (9) comporte un processeur de commande (10), une unité d'acquisition (11) des signaux de mesure d'intensité lumineuse et un ensemble d'interface (12) pour contrôler lesdits moyens de sélection.

3. Dispositif selon la revendication 1 ou 2, caractérisé en ce qu'il comporte une source de lumière unique (1) éclairant les deux branches et le système optique comporte des moyens de dérivation (7, 8) pour diriger vers les trois filtres les rayons lumineux ayant traversé la première ou la deuxième branche, les moyens de mesure comportent trois détecteurs (D1, D2, D3) pour mesurer la lumière ayant traversé les trois filtres, et les moyens de commutation électrique comportent des éléments (M) pour connecter par intermittence lesdits détecteurs avec ledit ensemble de pilotage et un commutateur (II) pour connecter la lampe au bloc d'alimentation électrique par intermittence.

4. Dispositif selon la revendication 1 ou 2, caractérisé en ce qu'il comporte trois sources lumineuses 'L1, L2, L3), le système optique comporte des moyens de dérivation (I'3, I'4, I'5) pour diriger la lumière desdites sources respectivement au travers desdits trois filtres sélectifs et des moyens diviseurs (16, 17) pour appliquer la lumière filtrée à la première et la deuxième branche, les moyens de mesure comportent un détecteur unique (D) pour mesurer la lumière émanant de l'une ou l'autre branche, et les moyens de commutation électrique comportent des éléments (I1-I3) pour l'alimentation sélective de l'une des trois sources lumineuses.

5. Dispositif selon la revendication 3 ou 4, caractérisé en ce qu'il comporte des moyens (14) de mesure de la température ambiante pouvant être connectés à l'ensemble de pilotage par les moyens de commutation électrique (M, I5).

6. Dispositif selon l'une des revendications précédentes, caractérisé en ce qu'il comporte des moyens (15) de mesure de la tension électrique d'alimentation de chaque lampe pouvant être connectés à l'ensemble de pilotage par les moyens (I1-I4) de commutation électrique.

7. Dispositif selon l'une des revendications précédentes, caractérisé en ce que ladite deuxième branche optique comporte un filtre neutre (5).

8. Dispositif selon l'une des revendications 1 à 6, caractérisé en ce que ladite deuxième branche optique comporte une autre cellule sensiblement identique à ladite cellule et contenant une substance neutre.

9. Dispositif selon l'une des revendications précédentes, caractérisé en ce que ladite première branche et ladite deuxième branche comporte chacune au moins un filtre optique.

10. Méthode pour la mise en oeuvre du dispositif selon la revendication 3, caractérisée en ce qu'elle comporte la réalisation automatique de cycles de mesure sous le contrôle de l'ensemble de pilotage, comportant chacun :

   - une étape de mesure où l'on dirige la lumière ayant traversé la cellule successivement au travers des trois filtres et on acquiert les valeurs détectées des intensités lumineuses issues des trois filtres;
   - une étape de mesure où l'on dirige la lumière ayant traversé ladite deuxième branche optique successivement au travers des trois filtres et on acquiert également les valeurs détectées des intensités lumineuses issues des trois filtres; et
   - on détermine des caractéristiques de la substance réagissante par une combinaison des valeurs d'intensité mesurées par chaque détecteur, respectivement aux cours des deux étapes précédentes.

11. Méthode pour la mise en oeuvre du dispositif selon la revendication 4, caractérisée en ce qu'elle comporte la réalisation automatique de cycles de mesure sous le contrôle de l'ensemble de pilotage, comportant chacun :

   - une étape de mesure où l'on dirige la lumière ayant traversé successivement les trois filtres vers la cellule contenant la substance réagissante et on acquiert les valeurs détectées par le détecteur (D);
   - une étape de mesure où l'on dirige la lumière ayant traversé successivement les trois filtres vers ladite deuxième branche optique et on acquiert aussi les valeurs détectées par le détecteur (D); et
   - on détermine des caractéristiques de la substance réagissante par une combinaison des valeurs d'intensité mesurées par le détecteur et émanant de la même lampe.

## Patentansprüche

1. Vorrichtung zur optischen Messung der Veränderungen einer reagierenden in einer transparenten Zelle (3) enthaltenen Substanz, umfassend: wenigstens eine Lichtquelle (1); einen ersten optischen Zweig und einen zweiten optischen Zweig, die parallel geschaltet sind und selektiv den Durchgang des durch die Zelle (3) und außerhalb dieser einfallenden Lichtes ermöglichen; ein optisches System zur Bildung der Strahlen, die den ersten oder den zweiten optischen Zweig durchsetzt haben, sowie ein selektives optisches Filter (F1, F2, F3) darunter eine Anordnung von drei zentrierten selektiven Filtern, das erste über eine erste Wellenlänge entsprechend dem isosbestischen Punkt der reagierenden Substanz, das zweite über eine Wellenlänge in einem Teil des Lichtspektrums, wo die Substanz am empfindlichsten ist, und das dritte in einem anderen Teil des Spektrums, wo die Substanz am wenigstens empfindlich ist; Meßmittel (D, D1-D3) für die Stärke des Lichtes, das das optische System durchsetzt hat; eine Steueranordnung (9); Selektionsmittel, die durch diese Steueranordnung geregelt sind und ein Block zur elektrischen Versorgung (13), dadurch gekennzeichnet, daß die Selektionsmittel aus zwei optischen Verschlußgliedern (01, 02), die jeweils im ersten Zweig und dem zweiten Zweig angeordnet sind, sowie Mitteln zur elektrischen Umschaltung (M, I2-I4) gebildet sind.

2. Vorrichtung nach Anspruch 1, dadurch gekennzeichnet, daß die Steueranordnung (9) einen Steuerprozessor (10), eine Erfassungseinheit (11) für Meßsignale für die Leuchtdichte und eine Schnittstellenanordnung (12) zum Regeln dieser Selektionsmittel umfaßt.

3. Vorrichtung nach Anspruch 1 oder 2, dadurch gekennzeichnet, daß sie eine einzige Lichtquelle (1) umfaßt, welche die zwei Zweige beleuchtet, und daß das optische System Abzweigungsmittel (7, 8) umfaßt, um zu den drei Filtern die Lichtstrahlen zu leiten, welche den ersten oder den zweiten Zweig durchsetzt haben, wobei die Meßmittel drei Detektoren (D1, D2, D3) umfassen, um das Licht zu messen, das durch die drei Filter gegangen ist, und daß die Mittel zur elektrischen Umschaltung Elemente (M) umfassen, um intermitierend diese Detektoren mit dieser Steueranordnung zu verbinden, und einen Umschalter (I1) um die Lampe mit dem Block zur elektrischen Versorgung intermitierend zu verbinden.

4. Vorrichtung nach Anspruch 1 oder 2, dadurch gekennzeichnet, daß sie drei Lichtquellen (L1, L2, L3) umfaßt, das optische System Abzweigungsmittel (I'3, I'4, I'5), um das Licht aus diesen Quellen jeweils durch diese drei selektiven Filter zu leiten und Teilermittel (16, 17) umfaßt, um das gefilterte Licht dem ersten und zweiten Zweig zuzuführen, wobei die Meßmittel einen einzigen Detektor (D) umfassen, um das aus einem der beiden Zweige hervorgehende Licht zu messen, und die Mittel zur elektrischen Umschaltung Elemente (I1-I3) zur selektiven Versorgung einer der drei Lichtquellen umfassen.

5. Vorrichtung nach Anspruch 3 oder 4, dadurch gekennzeichnet, daß sie Mittel (14) zum Messen der Umgebungstemperatur umfaßt, die mit der Steueranordnung über die Mittel zur elektrischen Umschaltung (M, I5) verbunden sein können.

6. Vorrichtung nach einem der vorhergehenden Ansprüche, dadurch gekennzeichnet, daß sie Mittel (15) zum Messen der elektrischen Versorgungsspannung jeder Lampe umfaßt, die mit der Steueranordnung über die Mittel (I1-I4) zur elektrischen Umschaltung verbunden sein können.

7. Vorrichtung nach einem der vorhergehenden Ansprüche, dadurch gekennzeichnet, daß dieser zweite optische Zweig ein neutrales Filter (5) umfaßt.

8. Vorrichtung nach einem der Ansprüche 1 bis 6, dadurch gekennzeichnet, daß dieser zweite optische Zweig eine weitere Zelle umfaßt, die im wesentlichen identisch zur Zelle ist und eine neutrale Substanz enthält.

9. Vorrichtung nach einem der vorhergehenden Ansprüche, dadurch gekennzeichnet, daß dieser erste Zweig und dieser zweite Zweig je wenigstens ein optisches Filter umfaßt.

10. Verfahren zum Einsatz der Vorrichtung nach Anspruch 3, dadurch gekennzeichnet, daß es die selbsttätige Durchführung von Meßzyklen unter der Regelung der Steueranordnung umfaßt, von denen jeder aufweist:

- einen Meßschritt, bei dem man das Licht, das die Zelle nacheinander durchsetzt hat, durch die drei Filter leitet, und bei dem man die ermittelten Werte der aus den drei Filtern stammenden Leuchtstärken erfaßt;

- einen Meßschritt, bei dem man das Licht, das den zweiten optischen Zweig nacheinander durchsetzt hat, durch die drei Filter leitet, und man ebenfalls die ermittelten Werte der aus den drei Filtern stammenden Leuchtstärken erfaßt; und

- man Charakteristiken der reagierenden Substanz durch eine Kombination der Stärkenwerte bestimmt, die durch jeden Detektor, jeweils während der beiden vorhergehenden Schritte gemessen wurden.

11. Verfahren zum Einsatz der Vorrichtung nach Anspruch 4, dadurch gekennzeichnet, daß es die selbsttätige Durchführung von Meßzyklen unter der Regelung der Steueranordnung umfaßt, die jeweils aufweisen:

- einen Meßschritt, bei dem man das Licht, das nacheinander die drei Filter durchsetzt hat, zur Zelle leitet, welche die reagierende Substanz enthält, und man die durch den Detektor (D) ermittelten Werte erfaßt;

- einen Meßschritt, bei dem man das Licht, das nacheinander die drei Filter durchsetzt hat, zum zweiten optischen Zweig leitet, und man auch die durch den Detektor (D) ermittelten Werte erfaßt; und

- man Charakteristiken der reagierenden Substanz durch eine Kombination der durch den Detektor gemessenen und aus der gleichen Lampe stammenden Stärkenwerte bestimmt.

## Claims

1. A device for taking optical measurements of changes occurring in a reacting substance contained in a transparent cell (3), consisting of at least one light source (1), a first optical branch and a second optical branch allowing the incident light to pass selectively through the cell (3) and outside it, an optical system for forming rays after crossing through the first optical branch or the second optical branch and a selective optical filter (F1, F2, F3) from a set of three selective filters, the first centred on a first wavelength corresponding to the isobestic point of the reacting substance, the second on a wavelength in a part of the light spectrum in which the substance is the most sensitive and the third in another part of the spectrum in which the substance is the least sensitive, means for measuring (D, D1-D3) the intensity of light having passed through the optical system, a control unit (9), selection means controlled by said control unit and an electric power pack (13), characterised in that the selection means are two optical shutters (O1, O2) arranged respectively in the first branch and the second branch and electric switching means (M, I2-I4).

2. A device as claimed in claim 1, characterised in that the control unit (9) has a command processor (10), an acquisition unit (11) for acquiring the measurement signals of luminous intensity and an interface unit (12) for controlling said selection means.

3. A device as claimed in claim 1 or 2, characterised in that it has a single light source (1) illuminating the two branches and the optical system has by-pass means (7, 8) for directing the light rays that have passed through the first or second branch to the three filters, the measuring means have three detectors (D1, D2, D3) for measuring light that has passed through the three filters and electric switching means with elements (M) for connecting said detectors intermittently to said control unit and a switch (I1) for intermittently connecting the lamp to the power pack.

4. A device as claimed in claim 1 or 2, characterised in that it has three light sources (L1, L2, L3), the optical system has by-pass means (1'3, 1'4, 1'5) for directing light from said sources respectively through said three selective filters and splitter means (16, 17) to apply the filtered light to the first and the second branch, the measuring means having a single detector (D) for measuring the light emanating from one or the other branch, and electric switching means with elements (I1-I3) for selectively supplying power to one of the three light sources.

5. A device as claimed in claim 3 or 4, characterised in that it has means (14) for measuring the ambient temperature which can be connected to the control unit by electric switching means (M, I5).

6. A device as claimed in one of the preceding claims, characterised in that it has means (15) for measuring the electric supply voltage of each lamp which can be connected to the control unit by electric switching means (I1-I4).

7. A device as claimed in one of the preceding claims, characterised in that said second optical branch has a neutral filter (5).

8. A device as claimed in one of claims 1 to 6, characterised in that said second optical branch has another cell essentially identical to said cell and containing a neutral substance.

9. A device as claimed in one of the preceding claims, characterised in that said first branch and said second branch each has at least one optical filter.

10. A method of implementing the device as claimed in claim 3, characterised in that it consists in automatically running measuring cycles under the control of the control unit, each involving :

- a measuring step during which the light that has passed through the cell is directed successively through the three filters and the detected values of luminous intensity from the three filters are acquired;
- a measuring step during which the light that has passed through the second optical branch is directed successively through the three filters and the detected values of luminous intensities from the three filters are also acquired; and
- determining characteristics of the reacting substance by a combination of intensity values measured respectively by each detector during the two preceding steps.

11. A method of implementing the device as claimed in claim 4, characterised in that it consists in running automatic measuring cycles under the control of the control unit, each involving:

- a measuring step in which the light that has passed successively through the three filters is directed towards the cell containing the reacting substance and the values detected by the detector (D) are acquired;
- a measuring step during which the light that has passed successively through the three filters is directed towards said second optical branch and the values detected by the detector (D) are also acquired; and
- determining characteristics of the reacting substance by a combination of intensity values measured by the detector and emanating from the same lamp.

**FIG.1**

**FIG.2**

## FIG.4

```
┌ ─ ─ ─ ─ ─ ─ ─ ─ ─ ─ ─ ─ ─ ┐
│                            │
│   ┌──────────────────┐     │
│   │ 8, 12 ou 16 conversions │
│   │ sur le détecteur D1 │  │
│   └──────────────────┘     │
│                            │
│   ┌──────────────────┐     │
│   │ 8, 12 ou 16 conversions │
│   │ sur le détecteur D2 │  │
│   └──────────────────┘     │
│                            │
│   ┌──────────────────┐     │
│   │ 8, 12 ou 16 conversions │
│   │ sur le détecteur D3 │  │
│   └──────────────────┘     │
│                            │
└ ─ ─ ─ ─ ─ ─ ─ ─ ─ ─ ─ ─ ─ ┘
```

## FIG.3

```
┌──────────────────────┐
│    Allumage lampe     │
└──────────────────────┘
┌──────────────────────┐
│   Acquisition Offset  │
└──────────────────────┘
┌──────────────────────┐
│     Ouverture O1      │
└──────────────────────┘
┌──────────────────────┐
│     Délai 10ms        │
└──────────────────────┘
┌──────────────────────┐
│  Acquisition mesures  │
│   branche cellule     │
└──────────────────────┘
┌──────────────────────┐
│     Fermeture O1      │
└──────────────────────┘
┌──────────────────────┐
│     Délai 30ms        │
└──────────────────────┘
┌──────────────────────┐
│     Ouverture O2      │
└──────────────────────┘
┌──────────────────────┐
│     Délai 10ms        │
└──────────────────────┘
┌──────────────────────┐
│  Acquisition mesures  │
│   branche dérivée     │
└──────────────────────┘
┌──────────────────────┐
│     Fermeture O2      │
└──────────────────────┘
┌──────────────────────┐
│  Acquisition tension  │
│  lampe température    │
└──────────────────────┘
┌──────────────────────┐
│   Extinction lampe    │
└──────────────────────┘
┌──────────────────────┐
│         FIN           │
└──────────────────────┘
```

## FIG.6

| |
|---|
| **Allumage lampe** |
| **Acquisition Offset** |
| **Ouverture $O_1$** |
| **Délai 10ms** |
| **Acquisition mesures** |
| **Fermeture $O_1$** |
| **Délai 30ms** |
| **Ouverture $O_2$** |
| **Délai 10ms** |
| **Acquisition By-Pass** |
| **Fermeture $O_2$** |
| **Acquisition tension lampe** |

## FIG.5

**Séquence 1 lampe L1**

**Séquence 2 lampe L2**

**Séquence 3 lampe L3**

**Acquisition température**

**FIN**